# EUROPÄISCHE PATENTSCHRIFT

(11) **EP 3 860 351 B1**
(45) Veröffentlichungstag und Bekanntmachung des Hinweises auf die Patenterteilung: **04.06.2025**
(21) Anmeldenummer: 19783271.0
(22) Anmeldetag: 02.10.2019
(51) Int. Cl.: A21B 3/04, F24C 15/00, F22B 1/28, F22B 35/00

(54) **VERFAHREN ZUM BETREIBEN EINES HAUSHALTS-DAMPFBEHANDLUNGSGERÄTS SOWIE HAUSHALTS-DAMPFBEHANDLUNGSGERÄT**
METHOD FOR OPERATING A HOUSEHOLD STEAM TREATMENT DEVICE AND HOUSEHOLD STEAM TREATMENT DEVICE
PROCÉDÉ DE FONCTIONNEMENT D'UN DISPOSITIF DE TRAITEMENT À LA VAPEUR MÉNAGÈRE ET DISPOSITIF DE TRAITEMENT À LA VAPEUR MÉNAGÈRE

(30) Priorität: 02.10.2018 DE 102018216931
(43) Veröffentlichungstag der Anmeldung: 11.08.2021
(73) Patentinhaber: BSH Hausgeräte GmbH, 81739 München (DE)
(72) Erfinder: DIEDERICHS, Stefan, 75447 Sternenfels (DE); FELDMANN, Kerstin, 75015 Bretten (DE); LEGO, Dieter, 76137 Karlsruhe (DE)
(86) Internationale Anmeldenummer: PCT/EP2019/076724
(87) Internationale Veröffentlichungsnummer: WO 2020/070198

(56) Entgegenhaltungen:
- EP-A1- 3 207 801
- DE-A1- 102014 110 965
- JP-A- 2006 250 442
- JP-A- 2018 096 569

## Beschreibung

Die Erfindung betrifft ein Verfahren zum Betreiben eines Haushalts-Dampfbehandlungsgeräts mit einem Dampferzeuger, der mit einem Wassertank verbunden ist, und mit einem Dampfbehandlungsraum, bei dem auf eine Anweisung zur Einleitung von Wasserdampf hin Wasser auf eine Verdampfungstemperatur erhitzt und der dabei erzeugte Wasserdampf in den Dampfbehandlungsraum eingeleitet wird. Die Erfindung betrifft auch ein Haushalts-Dampfbehandlungsgerät, aufweisend einen mit einem Wassertank verbunden Dampferzeuger, einen Dampfbehandlungsraum, eine Nutzerschnittstelle und eine Steuereinrichtung, wobei die Steuereinrichtung zur Durchführung des Verfahrens eingerichtet ist. Die Erfindung ist insbesondere vorteilhaft anwendbar auf eigenständige Dampfbehandlungsgeräte und auf Dampfbehandlungs-Kombinationsgeräte, d.h., Gargeräte wie Backöfen und/oder Mikrowellenöfen, die eine zusätzliche Dampfbehandlungsfunktion aufweisen. Die Erfindung ist insbesondere vorteilhaft anwendbar zum Backen von Teigwaren, beispielsweise Brot, insbesondere zusammen mit einem Vorheizen des Dampfbehandlungsraums.

Um Brot wie in Rezepten beschrieben besonders gelungen zu backen, sollte nach einem Vorheizen eines Backofens möglichst schnell eine große Menge Wasserdampf in den Ofenraum eingeleitet und dem kalten Brot-Teigling zugeführt werden, um gewünschte positive Effekte aufgrund einer Kondensation des Wasserdampfs an der Oberfläche des Brot-Teiglings zu erreichen. Jedoch ist dies bei Haushalts-Dampfbehandlungsgeräten, die eine im Vergleich zu professionellen Brotbacköfen nur geringe Heizleistung bereitstellen können, bisher nur umständlich und/oder wenig effektiv möglich.

EP 3 207 801 A1 offenbart ein Verfahren zum Betreiben eines Haushalts-Dampfbehandlungsgeräts mit einem Dampfbehandlungsraum und mit einem außerhalb des Dampfbehandlungsraums angeordneten Dampferzeuger, der mit einem Wassertank verbunden ist, wobei Wasser in dem Wassertank auf eine erhöhte Vorwärmtemperatur unterhalb einer Verdampfungstemperatur erhitzt wird, das Wasser dort auf der Vorwärmtemperatur gehalten wird, auf eine Anweisung zur Einleitung von Wasserdampf hin das vorgewärmte Wasser in den Dampferzeuger geleitet wird und dort weiter auf eine Verdampfungstemperatur erhitzt und der erzeugte Wasserdampf in den Dampfbehandlungsraum eingeleitet wird. JP 2018 096569 A offenbart ein Verfahren zum Betreiben eines kommerziellen Dampfbehandlungsgeräts.

Es ist die **Aufgabe** der vorliegenden Erfindung, die Nachteile des Standes der Technik zumindest teilweise zu überwinden und insbesondere eine Möglichkeit für Haushalts-Dampfbehandlungsgeräte mit geringer Verdampferheizleistung bereitzustellen, eine große Menge and Wasserdampf in kurzer Zeit in den Dampfbehandlungsraum einzuleiten, und zwar auch dann wenn eine zum Heizen des Wassers bereitstehende Heizleistung vergleichsweise gering ist, z.B. im Vergleich zu professionellen Brotbacköfen.

Diese Aufgabe wird gemäß den Merkmalen der unabhängigen Ansprüche gelöst.

Vorteilhafte Ausführungsformen sind Gegenstand der abhängigen Ansprüche.

Die Aufgabe wird gelöst durch ein Verfahren zum Betreiben eines Haushalts-Dampfbehandlungsgeräts mit einem Dampfbehandlungsraum und mit einem außerhalb des Dampfbehandlungsraums angeordneten Dampferzeugers, der mit einem Wassertank verbunden ist, wobei bei dem Verfahren
a) Wasser mittels des Dampferzeugers auf eine erhöhte Temperatur ("Vorwärmtemperatur") unterhalb einer Verdampfungstemperatur erhitzt wird,
b) das erhitzte Wasser auf der erhöhten Temperatur gehalten wird und
c) auf eine Anweisung zur Einleitung von Wasserdampf hin das erhitzte Wasser weiter auf eine Verdampfungstemperatur erhitzt und der erzeugte Wasserdampf in
den Dampfbehandlungsraum eingeleitet wird, wobei der Wasserdampf in Form mindestens eines Dampfstoßes eingeleitet wird.

In Schritt a) kann vorgesehen sein, dass eine Abschaltung des Dampferzeugers nach Erreichen einer beispielsweise durch einen Temperatursensor gemessenen Temperatur erfolgt.

Es ist jedoch auch vorstellbar, dass in Schritt a) eine Abschaltung nach Ablauf einer bestimmten Zeit auf Grundlage von zumindest einem Parameter erfolgt, wobei als Parameter beispielsweise die Heizleistung des Dampferzeugers, eine Wassermenge im Dampferzeuger oder dergleichen vorgesehen sein kann. Somit könnte dann der Abschaltzeitpunkt des Dampferzeugers aufgrund der Kenntnis über die Heizleistung des Verdampfers bzw. die Wassermenge in diesem zeitlich vorausberechnet werden. Dadurch könnte in vorteilhafter Weise auf einen Temperatursensor verzichtet werden.

In Schritt b) kann das Halten der Temperatur durch ein Takten, also ein wiederholtes Ein- und Ausschalten des Dampferzeugers, erreicht werden. Im Falle einer Temperaturmessung durch einen Temperatursensor oder ein anderes geeignetes Erfassungsmittel kann eine Abschaltung des Dampferzeugers nach Erreichen einer bestimmen Temperatur erfolgen, wobei dann der Dampferzeuger bei Unterschreiten einer bestimmten Temperatur wieder eingeschaltet wird. Im Falle der zeitlichen Steuerung auf Grundlage der vorstehend genannten Parameter kann ebenfalls ein Takten des Dampferzeugers vorgesehen sein, wobei dann das Ein- und Ausschalten des Dampferzeugers auf Grundlage einer bestimmten Zeit erfolgt. Hierbei kann die bestimmte Zeit auf Grundlage der oben genannten Parameter berechnet werden.

Dieses Verfahren ergibt den Vorteil, dass auch mittels eines außerhalb des Dampfbehandlungsraums angeordneten Dampferzeugers auf die Anweisung zur Einleitung von Wasserdampf hin sehr schnell eine große Menge Wasserdampf in den Dampfbehandlungsraum einleitbar ist. Dabei wird ausgenutzt, dass das Wasser in Schritt a) bereits auf die (insbesondere im Vergleich zu einer Raumtemperatur) erhöhte Vorwärmtemperatur erhitzt worden ist und so zum Erreichen der Siede- oder Verdampfungstemperatur in Schritt c) eine nur vergleichsweise geringe Energiemenge benötigt wird, die sehr schnell in das Wasser einbringbar ist. Dadurch wiederum kann Wasserdampf sehr schnell in großen Mengen in den Behandlungsraum eingebracht oder eingeleitet werden kann. Die Abgabe von Wasserdampf in großen Mengen bereits kurz nach Ausgeben der Anweisung wird dadurch unterstützt, dass das auf der Vorwärmtemperatur befindliche Wasser in der Regel praktisch vollständig durchgewärmt ist.

Mittels des obigen Verfahrens lässt sich in Schritt c) auf die Anweisung zur Einleitung von Wasserdampf hin der Wasserdampf in großen Mengen innerhalb von fünf Sekunden oder weniger, insbesondere innerhalb von drei Sekunden oder weniger, in den Dampfbehandlungsraum einleiten. Wäre das Wasser hingegen nicht vorgewärmt, würden typischerweise ca. 90 Sekunden zum Bereitstellen größerer Mengen von Wasserdampf benötigt. Ein so langer Zeitverzug kann Nachteile bei der Zubereitung von Lebensmitteln ergeben. Beispielsweise wird bei einem Backen von Brot aus einem Brot-Teigling ohne Nutzung des obigen Verfahrens die Oberfläche des Brot-Teiglings schneller erwärmt als eine Dampfatmosphäre in dem Dampfbehandlungsraum aufgebaut werden kann, wodurch eine ausreichende Kondensation des heißen Wasserdampfs auf der Oberfläche nachteiligerweise verhindert wird. Das obige Verfahren ermöglicht also verbesserte Ergebnisse bei einer Lebensmittelzubereitung. Dies gilt insbesondere für den Fall, dass der Dampfbehandlungsraum zuvor vorgeheizt worden ist.

Ein weiterer Vorteil des Verfahrens besteht darin, dass das in Schritt a) durchgeführte Vorwärmen des Wassers selbst nicht zeitkritisch ist und auch mit vergleichsweise geringer Heizleistung durchführbar ist, z.B. mit einer Heizleistung von 1500 W oder weniger, insbesondere auch mit 1200 W oder weniger, insbesondere auch mit 900 W oder weniger. Diese vergleichsweise geringen Heizleistungen reichen auch aus, um im Schritt c) das Wasser in kurzer Zeit (z.B. innerhalb von drei Sekunden) auf seine Verdampfungstemperatur zu erhitzen. Im Gegensatz dazu weisen professionelle Dampfbehandlungsgeräte und einige Haushalts-Dampfgargeräte eine zur Dampferzeugung nutzbare Heizleistung ("Verdampferleistung" oder "Verdampferheizleistung") von typischerweise 2700 W auf und weisen zudem einen Festwasseranschluss auf, um kontinuierlich Wasserdampf direkt aus kaltem Wasser zu erzeugen.

Noch ein Vorteil des Verfahrens besteht darin, dass aufgrund der Anordnung des Dampferzeugers oder Verdampfers außerhalb des Dampfbehandlungsraums der Zeitpunkt der Erzeugung von Wasserdampf grundsätzlich beliebig gewählt werden kann. Dies steht im Gegensatz zu Dampfbehandlungsgeräten mit einer in dem Dampfbehandlungsraum befindlichen Wasserschale. Bei Geräten mit Wasserschale ist eine gezielte Abgabe von Wasserdampf nur in einem kalten oder gering geheizten Zustand des Dampfbehandlungsraums möglich, da sonst das darin befindliche Wasser selbsttätig verdampft. Somit ist bei Geräten mit Wasserschale eine zeitlich gezielte Zugabe von Wasserdampf praktisch unmöglich, wenn sich die Temperatur des Behandlungsraums oberhalb der Verdampfungstemperatur von Wasser befindet, was bei vielen Rezepturen mit Vorheizen der Fall ist. Das vorliegende Verfahren ist hingegen grundsätzlich unabhängig von der Temperatur des Behandlungsraums einsetzbar und damit grundsätzlich in Kombination mit allen Lebensmittelbehandlungs-Betriebsarten oder Heizarten, z.B. bei allen Betriebsarten eines Backofens mit Dampfbehandlungsfunktion wie Oberhitze-, Unterhitze-, Grill-, Heißluft-Betriebsart usw.

Noch ein Vorteil gegenüber Geräten mit Wasserschale besteht darin, dass der Dampferzeuger aus dem Wassertank automatisch mit Wasser nachfüllbar ist und dazu die Tür zum Garraum nicht geöffnet zu werden braucht. Zudem ist ein Füllvolumen eines Wassertanks typischerweise erheblich größer als ein Fassungsvermögen einer typischen Wasserschale (z.B. > 1 | gegenüber ca. 300 ml), so dass mittels des obigen Verfahrens auch mehr Wasserdampf ohne Nutzereingriff in den Dampfbehandlungsraum eingebracht werden kann.

Das vorliegende Verfahren ist insbesondere zum Backen von Teigwaren, speziell Brot, Brötchen, Croissants usw. vorteilhaft einsetzbar, da hierbei eine schnelle Bedampfung nach Einbringen des Teiglings in den vorgeheizten Dampfbehandlungsraum für ein besonders gutes Backergebnis (hohe Knusprigkeit, hohe optische Qualität usw.) benötigt wird. Insbesondere gibt es Rezepturen von Teigwaren, die einen vorgeheizten Dampfbehandlungsraum benötigen, damit die Teigwaren nicht breitlaufen.

Da das Verfahren auch mit einem auf eine Temperatur oberhalb der Verdampfungstemperatur von Wasser vorgeheizten Dampfbehandlungsraum durchgeführt werden kann, ergibt sich der weitere Vorteil beim Backen von Teigwaren, dass ein Einsatz eines Brotbacksteins, der ein Vorheizen benötigt, möglich ist.

Es ist somit eine vorteilhafte Ausgestaltung, dass das Verfahren zusammen mit einem Vorheizen des Dampfbehandlungsraums durchgeführt wird.

Jedoch ist das vorliegende Verfahren nicht auf eine Dampfbehandlung von Teigwaren beschränkt und kann mit allen gewünschten Lebensmitteln oder sogar anderen Haushaltsgütern durchgeführt werden. Auch ist das Verfahren ohne Vorheizen des Dampfbehandlungsraums durchführbar. Das Verfahren kann auch als "Schnellbedampfungsverfahren" oder "Schnellbeschwadungsverfahren" bezeichnet werden. Schritt a) kann auch als "Vorwärmschritt", Schritt b) auch als "Halteschritt" bezeichnet werden. Schritt c) kann auch als "Bedampfungsschritt" oder "Dampfeinleitungsschritt" bezeichnet werden.

Das Haushalts-Dampfbehandlungsgerät kann ein dediziertes Dampfbehandlungsgerät sein. Um eine Dampfbehandlung mit höheren Temperaturen in dem Dampfbehandlungsraum zu kombinieren, ist es vorteilhaft, dass das Haushalts-Dampfbehandlungsgerät ein Gargerät mit einer Dampfbehandlungsfunktionalität ist, z.B. ein Backofen mit zuschaltbarer Dampfbehandlungsfunktionalität (auch als "Added Steam" bezeichenbar), ein Mikrowellengerät mit zuschaltbarer Dampfbehandlungsfunktionalität, usw. Insbesondere falls ein Dampfbehandlungs-Kombinationsgerät vorliegt, kann der Dampfbehandlungsraum auch als Garraum oder Ofenraum bezeichnet werden.

Der Dampferzeuger oder Verdampfer kann ein Boiler oder ein Durchlauferhitzer sein. Der Dampferzeuger kann insbesondere eine Dampferzeugungskammer und mindestens ein elektrisch betreibbares Heizelement zum Erhitzen des Wassers in der Dampferzeugungskammer aufweisen. Das in der Dampferzeuger zu erhitzende Wasser wird aus dem Wassertank zugeleitet, z.B. durch Schwerkraft oder mittels einer Pumpe. Der in der Dampferzeugungskammer erzeugte Wasserdampf wird - ggf. über ein Absperrventil - in den Dampfbehandlungsraum geleitet.

Der Wassertank des Haushalts-Dampfbehandlungsgeräts kann ein fest in dem Gerät installierter Wassertank sein, der von einem Nutzer z.B. über eine Einfüllöffnung oder einen Schlauch mit Wasser befüllbar ist. Alternativ ist der Wassertank zur Befüllung und ggf. Reinigung entnehmbar.

Es ist eine Weiterbildung, dass das Haushalts-Dampfbehandlungsgerät festwasseranschlusslos ist, d.h., keinen Festwasseranschluss aufweist. Gegenüber Geräten mit Festwasseranschluss wird der Vorteil einer besonders einfachen Aufstellung erreicht.

Es ist eine alternative Weiterbildung, dass das Haushalts-Dampfbehandlungsgerät über einen Festwasseranschluss verfügt, über den der Wassertank manuell oder automatisch geräteseitig befüllbar ist.

Dass das erhitzte Wasser in Schritt b) auf der erhöhten Temperatur gehalten wird, umfasst, dass das Haushalts-Dampfbehandlungsgerät dazu eingerichtet ist, das Wasser auf der Vorwärmtemperatur zu halten. Gibt ein Nutzer die Anweisung zur Einleitung von Wasserdampf unmittelbar nach Erreichen der Vorwärmtemperatur in Schritt a) oder wird die Anweisung programmgesteuert unmittelbar nach Erreichen der Vorwärmtemperatur in Schritt a) gegeben, wird Schritt b) praktisch übersprungen oder eine entsprechende Haltedauer von Null Sekunden angesetzt.

Es ist eine Weiterbildung, dass dann, wenn ein Nutzer eine Anweisung zur Einleitung von Wasserdampf mittels der "Schnellbedampfung" oder "Schnellbeschwadung" gibt, obwohl die Temperatur in Schritt a) die Vorwärmtemperatur noch nicht erreicht hat, ein Hinweis ausgegeben wird, dass diese Funktion noch nicht bereitsteht und/oder diese Funktion erst mit Erreichen der Vorwärmtemperatur ausgelöst wird, also z.B. auch hier Schritt b) übersprungen wird.

Es ist eine Weiterbildung, dass das Wasser gesteuert auf die Vorwärmtemperatur erhitzt wird, z.B. mit einer vorgegebenen Heizleistung oder einem vorgegebenen Heizleistungsprofil (z.B. umfassend eine Heizdauer). Die Heizleistung oder das Heizleistungsprofil sind in einer Variante von einem Füllstand in dem Dampferzeuger abhängig. Diese Weiterbildung ist vorteilhaft, wenn die Temperatur des Wassers in dem Dampferzeuger, insbesondere in dessen Dampferzeugungskammer, nicht oder nicht genau genug abfühlbar ist. Der Füllstand kann in einer Weiterbildung mittels eines Füllstandssensors bestimmt werden.

Es ist Weiterbildung, dass das Wasser geregelt auf die Vorwärmtemperatur erhitzt wird und dort gehalten wird. Diese Weiterbildung ist vorteilhaft, da die Vorwärmtemperatur besonders genau eingehalten werden kann. Diese Weiterbildung kann insbesondere genutzt werden, wenn die Temperatur des Wassers in dem Dampferzeuger beispielsweise mittels eines Temperatursensors ausreichend genau abfühlbar ist.

Es ist eine Ausgestaltung, dass vor Schritt a) Wasser aus dem Wassertank in eine Dampferzeugungskammer des Dampferzeuger geleitet wird, in Schritt a) das in der Dampferzeugungskammer befindliche Wasser auf die erhöhte Temperatur erhitzt und in Schritt b) dort gehalten wird. Dies ermöglicht eine besonders schnelle Erhitzung auf die Vorwärmtemperatur und Halten auf der Vorwärmtemperatur auch bei einer vergleichsweise geringen Heizleistung. Hierbei wird ausgenutzt, dass der Wassertank typischerweise ein merklich größeres Füllvolumen aufweist als die Dampferzeugungskammer des Dampferzeugers. Der vergleichsweise große Wassertank (der z.B. ein Volumen von 1 Liter oder mehr aufweisen kann) ermöglicht ein automatisches Nachfüllen der Dampferzeugungskammer des Dampferzeugers, wenn die Dampferzeugungskammer geleert oder fast geleert ist. Zudem ermöglicht der Wassertank für praktische Zwecke in einem Haushalt einen Verzicht auf einen Festwasseranschluss ohne Einbußen in der Nutzungsbequemlichkeit, wobei jedoch grundsätzlich auch ein Festwasseranschluss zur Füllung des Wassertanks vorhanden sein kann. Auch ist es grundsätzlich möglich, das Wasser in dem Wassertank selbst auf eine erhöhte Temperatur zu erwärmen.

Es ist eine Ausgestaltung, dass die Vorwärmtemperatur nicht mehr als 10°C unter der Verdampfungstemperatur liegt, insbesondere nur ca. 5°C unter der Verdampfungstemperatur liegt. So wird der Vorteil erreicht, dass sich das Wasser vor Auslösen der Beschwadung in Schritt c) bereits auf einer so hohen Vorwärmtemperatur befindet, dass nur noch wenig zusätzliche Energie benötigt wird, um die Vorwärmtemperatur auf die Verdampfungstemperatur anzuheben. Andererseits wird vorteilhafterweise bei einer solchen Vorwärmtemperatur Wasserdampf noch nicht oder in nur geringer Menge erzeugt, so dass sich kein unerwünschter oder unnötiger Dampfbehandlungseffekt in dem Behandlungsraum ergibt. Zudem wird so das Wasser in dem Dampferzeuger nicht oder nicht merklich verbraucht.

Es ist eine Ausgestaltung, dass die erhöhte Temperatur oder Vorwärmtemperatur mindestens 90°C beträgt, insbesondere ca. 95°C. Dabei wird von einer Verdampfungstemperatur von 100°C ausgegangen. Jedoch kann die Verdampfungstemperatur auch von der normalen Verdampfungstemperatur von 100°C abweichen, beispielsweise in Abhängigkeit von einem typischen Luftdruck am Aufstellort des Dampfbehandlungsgeräts.

Es ist eine Weiterbildung, dass zum Verhindern eines Dampfeintritts in den Dampfbehandlungsraum eine dampftechnische Verbindung zwischen dem Dampferzeuger und dem Dampfbehandlungsraum mittels eines Ventils dampftechnisch absperrbar ist. Das Ventil kann während der Schritte a) und b) geschlossen sein und sich erst auf die Anweisung aus Schritt c) hin öffnen. Dies ergibt den Vorteil, dass ein unerwünschter Eintritt von Wasserdampf in den Dampfbehandlungsraum zuverlässig unterbunden werden kann.

Es ist eine Ausgestaltung, dass in Schritt c) das Wasser mit einer größtmöglich verfügbaren Heizleistung auf die Verdampfungstemperatur erhitzt wird. So wird der Vorteil erreicht, dass eine Zeitverzögerung zwischen der Anweisung zur Einleitung des Wasserdampfs und dem tatsächlichen Einleiten großer Mengen Wasserdampf in den Dampfbehandlungsraum besonders klein gehalten wird. Diese Verzögerung kann dadurch insbesondere fünf Sekunden oder weniger insbesondere drei Sekunden oder weniger, betragen.

Die größtmöglich verfügbare Heizleistung in Schritt c) kann beispielsweise 1500 W oder weniger, insbesondere 1200 W oder weniger, insbesondere 1000 W oder weniger, insbesondere 900 W oder weniger, insbesondere 800 W oder weniger, betragen. So wird der Vorteil erreicht, dass der Dampferzeuger vergleichsweise preiswert und kompakt ausgestaltbar ist. Dabei ist das in Schritt a) durchgeführte Vorwärmen des Wassers selbst nicht zeitkritisch und daher auch mit vergleichsweise geringer Heizleistung nutzerfreundlich durchführbar.

Es ist eine Weiterbildung, dass in Schritt a) das Wasser mit einer größtmöglich verfügbaren Heizleistung auf die Vorwärmtemperatur erhitzt wird. Dies ergibt den Vorteil, dass die Vorwärmtemperatur in dem Vorwärmschritt a) besonders schnell erreicht wird. Die zugehörige Heizleistung kann der Heizleistung aus Schritt c) entsprechen.

Es ist eine Ausgestaltung, dass das Verfahren auf eine Nutzereingabe hin aktiviert oder gestartet wird. Ein Nutzer kann das Verfahren also gezielt auslösen. Dies ergibt den Vorteil, dass die zum Erreichen der Vorwärmtemperatur benötigte Energiemenge nur dann verbraucht wird, wenn sie konkret benötigt wird. Dass das Verfahren auf die Nutzereingabe hin aktiviert wird, kann umfassen, dass das Verfahren unmittelbar oder direkt auf die Nutzereingabe hin aktiviert wird, z.B. indem ein Nutzer eine entsprechende Betätigungseinrichtung (z.B. eine Taste, ein berührungsempfindliches Bedienfeld usw.) betätigt (manuelle Betätigung). Diese Ausgestaltung kann auch umfassen, dass ein Nutzer ein Garprogramm startet oder aktiviert, das dann das Verfahrens auslöst, d.h., dass das Verfahren auf eine Nutzereingabe hin indirekt aktiviert oder gestartet wird.

Es ist eine Ausgestaltung, dass die Anweisung zur Einleitung des Wasserdampfs nutzerseitig erfolgt, insbesondere unmittelbar oder direkt auf die Nutzereingabe hin, z.B. indem ein Nutzer eine entsprechende Betätigungseinrichtung (z.B. eine Taste, ein berührungsempfindliches Bedienfeld usw.) betätigt (manuelle Betätigung).

Es ist eine alternative oder zusätzliche Ausgestaltung, dass die Anweisung zur Einleitung des Wasserdampfs geräteseitig erfolgt, insbesondere programmgesteuert. So kann die Schnellbedampfung des Dampfbehandlungsraums besonders präzise auf einen Dampfbehandlungsvorgang abgestimmt werden.

Es ist auch möglich, die nutzerseitige Anweisung zur Einleitung des Wasserdampfs mit einer programmgesteuerten Anweisung zu kombinieren. Beispielsweise kann ein Dampfbehandlungsprogramm gestartet werden, welches das Schnellbedampfungsverfahren nutzt, z.B. ein Brotbackprogramm. Dabei kann das Programm so ausgestaltet sein, dass es nach seinem Start die Schritte a) und b) ausführt und dann darauf wartet, dass die Tür des Dampfbehandlungsraums manuell geschlossen wird, um folgend die Temperaturerhöhung auf die Verdampfungstemperatur unmittelbar oder ohne Zeitverzögerung durchzuführen.

Erfindungsgemäß wird in Schritt c) der Wasserdampf in Form mindestens eines Dampfstoßes in den Dampfbehandlungsraum eingeleitet Dies ergibt den Vorteil,
dass die Dampfmenge mengenmäßig und zeitmäßig besonders gut dosierbar ist und zudem eine Dampfeinleitung in den Dampfbehandlungsraum bei Bedarf mittels mehrerer Dampfstöße über eine längere Zeit erfolgen kann als bei kontinuierlicher Dampfeinleitung.

Es ist eine Ausgestaltung, dass eine Zahl, eine Dauer und/oder eine zeitliche Abfolge des mindestens einen Dampfstoßes eingestellt wird. So wird einem Nutzer oder einem Programm vorteilhafterweise die Möglichkeit eröffnet, die Dampfeinleitung in den in den Dampfbehandlungsraum ganz besonders gut zu dosieren und an den Garvorgang o.ä. anzupassen.

Es ist eine Ausgestaltung, dass eine während Schritt c) des Verfahrens in den Dampfbehandlungsraum abgebbare Dampfmenge begrenzt wird.

Es ist eine Ausgestaltung, dass vor Schritt c) eine Vorheizfunktion aktiviert wird und die Anweisung zur Einleitung des Wasserdampfs in Schritt c) mit Beendigung der Vorheizfunktion erfolgt, insbesondere mit einem Schließen der Tür. Dadurch wird der Vorteil erreicht, dass sich das Verfahren mit einem Vorheizen kombinieren lässt, insbesondere zum Backen von Teigwaren. Im Speziellen kann Wasserdampf besonders vorteilhaft unverzüglich nach Beschickung des vorgeheizten Dampfbehandlungsraums mit Lebensmitteln in den Dampfbehandlungsraum eingebracht werden, insbesondere innerhalb von nicht mehr als fünf Sekunden, insbesondere innerhalb von nicht mehr als drei Sekunden, nach Ausgabe der Anweisung. Die Anweisung kann für einen besonders geringen Zeitverzug aufgrund des Schließens der Tür gegeben werden. Es ist eine Weiterbildung, dass das Verfahren zusammen mit dem Vorheizen oder innerhalb einer vorgegebenen Zeitdauer in Bezug auf den Beginn des Vorheizens (d.h., vor oder nach Beginn des Vorheizens) aktiviert oder gestartet wird.

Die Aufgabe wird auch gelöst durch ein Haushalts-Dampfbehandlungsgerät, aufweisend einen mit einem Wassertank verbunden Dampferzeuger, einen Dampfbehandlungsraum, eine Nutzerschnittstelle und eine Steuereinrichtung, wobei die Steuereinrichtung zur Durchführung des Verfahrens wie oben beschrieben eingerichtet ist. Das Haushalts-Dampfbehandlungsgerät kann analog zu dem Verfahren ausgebildet werden und weist die gleichen Vorteile auf.

Es ist eine Ausgestaltung, dass das Haushalts-Dampfbehandlungsgerät ein Backofen mit einer Dampfbehandlungsfunktionalität und einer Vorheizfunktionalität ist.

Es ist eine Ausgestaltung, dass das Haushalts-Dampfbehandlungsgerät eine Vorheizfunktionalität aufweist und mit einem sog. "Brot-Backstein" ausgerüstet ist oder ausrüstbar ist. Dadurch wird der Vorteil erreicht, dass Teigwaren auch auf dem Brot-Backstein zubereitet werden können, der ein Vorheizen benötigt, und durch Einsatz des Verfahrens auch effektiv mit Wasserdampf benetzt werden können. So wird ein besonders gutes Zubereitungsergebnis erreicht.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Seitenansicht ein Haushalts-Dampfbehandlungsgerät; und
- Fig.2: zeigt einen möglichen Verfahrensablauf zum Durchführen einer Schnellbedampfung eines Dampfbehandlungsraums des Haushalts-Dampfbehandlungsgeräts aus Fig.1.

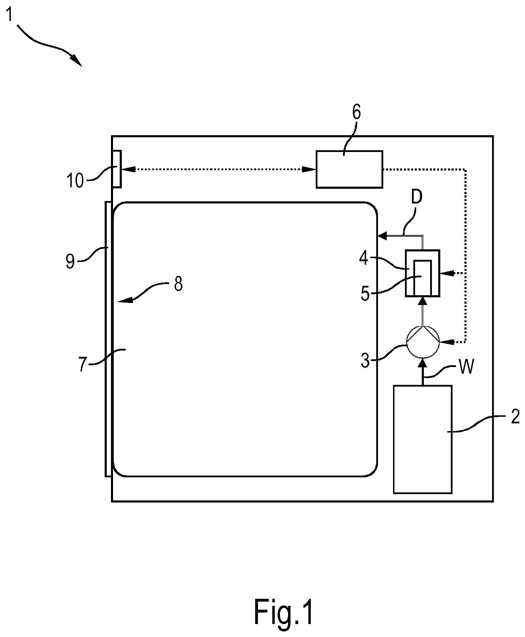

**Fig.1** zeigt ein Haushalts-Dampfbehandlungsgerät 1, aufweisend einen mit einem Wassertank 2 über eine Pumpe 3 verbunden Dampferzeuger 4. Der Wassertank 2 ist von einem Nutzer mit Wasser W befüllbar und dazu z.B. entnehmbar. Das Haushalts-Dampfbehandlungsgerät 1 weist rein beispielhaft keinen Festwasseranschluss auf. Das Haushalts-Dampfbehandlungsgerät 1 kann ein Backofen mit einer zusätzlichen Dampfbehandlungsfunktion sein.

Aus dem Wassertank 2 ist durch Betreiben der Pumpe 3 Wasser in eine Dampferzeugungskammer 5 des Dampferzeugers 4 förderbar. In der Dampferzeugungskammer 5 befindliches Wasser W ist durch Heizelemente (o. Abb.) des Dampferzeugers 4 gezielt auf eine Soll-Temperatur erhitzbar. Dazu kann der Dampferzeuger 4 optional einen Temperaturfühler aufweisen. Eine maximale Heizleistung beträgt z.B. 1200 W. Auch kann der Dampferzeuger 4 optional einen Füllstandssensor (o. Abb.) zum Abfühlen eines Füllstands von Wasser W in der Dampferzeugungskammer 5 aufweisen. Der Betrieb der Pumpe 3 und des Dampferzeugers 4 ist über eine Steuereinrichtung 6 steuerbar.

In der Dampferzeugungskammer 5 durch Erhitzen des Wassers W erzeugter Wasserdampf D gelangt in einen Dampfbehandlungsraum 7. Der Dampfzugang zwischen dem Dampferzeuger 4 und dem Dampfbehandlungsraum 7 kann dauernd offen oder wahlweise öffenbar und verschließbar sein, z.B. mittels eines Ventils (o. Abb.). Der Dampfbehandlungsraum 7 weist eine typischerweise frontseitige Beschickungsöffnung 8 auf, die mittels einer Tür 9 verschließbar ist. Die Tür 9 kann mit einem Türkontaktschalter (o. Abb.) ausgerüstet sein, über den die Steuereinrichtung 6 einen Verschluss der Tür 9 feststellen kann.

Die Steuereinrichtung 6 ist zudem mit einer frontseitig angeordneten Nutzerschnittstelle 10 verbunden, die z.B. als ein berührungsempfindlicher Bildschirm o.ä. ausgebildet sein kann. Die Steuereinrichtung 6 kann auch mit einer insbesondere drahtlosen Kommunikationseinrichtung (z.B. einem WiFi-Modul oder einem Bluetooth-Modul, o. Abb.) verbunden sein, so dass das Haushalts-Dampfbehandlungsgerät 1 auch fernüberwacht und/oder ferngesteuert werden kann, beispielsweise von einem mobilen Nutzerendgerät wie einem Smartphone usw.

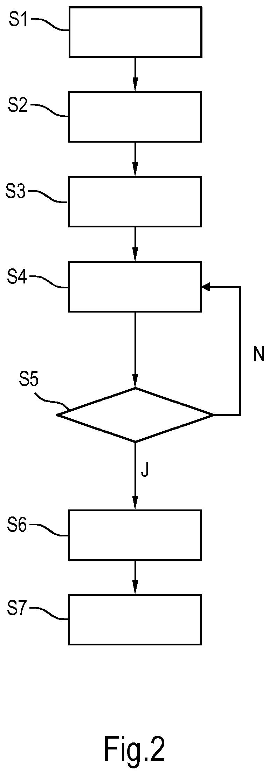

**Fig.2** zeigt einen möglichen Verfahrensablauf zum Durchführen einer Schnellbedampfung des Dampfbehandlungsraums 7 des Haushalts-Dampfbehandlungsgeräts 1.

In einem Schritt S1 wird ein Schnellbedampfungsverfahren gestartet oder aktiviert. Dies kann beispielsweise dadurch geschehen, dass eine Nutzer über die Nutzerschnittstelle 10 oder ferngesteuert über ein Smartphone o.ä. eine entsprechende Nutzereingabe tätigt.

In einem Schritt S2 wird, falls die Dampferzeugungskammer 5 nicht bereits mit einer ausreichenden Menge Wasser W gefüllt ist, mittels Betreibens der Pumpe 3 Wasser W aus dem Wassertank 2 in die Dampferzeugungskammer 5 geführt.

In einem Schritt S3 wird das Wasser W in der Dampferzeugungskammer 5 auf eine erhöhte Vorwärmtemperatur von mindestens 90°C, insbesondere von 95°C, erhitzt. Die Vorwärmtemperatur liegt unterhalb einer Siede- oder Verdampfungstemperatur, die typischerweise ca. 100°C beträgt. Zu diesem Zeitpunkt tritt noch kein oder nur geringfügig wenig Wasserdampf in den Dampfbehandlungsraum 7 ein.

Die in Schritt S3 in die Dampferzeugungskammer 5 bzw. in das darin befindliche Wasser W eingebrachte Heizleitung ist zum Erreichen einer möglichst kurzen Zeit ("Vorheizzeit") bis zum Erreichen der Vorwärmtemperatur vorteilhafterweise hoch, insbesondere eine größtmöglich verfügbare Heizleistung, z.B. 1200 W.

In einem Schritt S4 wird das Wasser in der Dampferzeugungskammer 5 auf der Vorwärmtemperatur gehalten. Auch hierbei tritt noch kein oder nur geringfügig wenig Wasserdampf in den Dampfbehandlungsraum 7 ein.

In einem Schritt S5 wird abgefragt, ob eine Anweisung gegeben wird, Wasserdampf D gezielt in den Dampfbehandlungsraum 7 einzubringen. Die Anweisung kann direkt durch einen Nutzer (durch manuelle Betätigung, Sprachsteuerung usw.) oder geräteseitig, insbesondere programmgesteuert, gegeben werden oder erfolgen.

Falls die Anweisung aus Schritt S5 erfolgt ("J"), wird in einem Schritt S6 das in der Dampferzeugungskammer 5 befindliche Wasser W weiter erhitzt, so dass es seine Verdampfungstemperatur erreicht. Da zum Erreichen der Verdampfungstemperatur eine nur vergleichsweise geringe Energiemenge benötigt wird und sich das Wasser W in der Dampferzeugungskammer 5 zudem sich praktisch vollständig durchgewärmt auf der Vorwärmtemperatur befindet, wird Wasserdampf D nach Ausgeben der Anweisung in sehr kurzer Zeit in großen Mengen in den Dampfbehandlungsraum 7 eingebracht oder eingeleitet.

Die in Schritt S6 in der Dampferzeugungskammer 5 bzw. in das darin befindliche Wasser W eingebrachte Heizleitung ist zum Erreichen einer möglichst kurzen Zeit bis zum Erreichen der Verdampfungstemperatur und zum Bereitstelle einer besonders großen Dampfmenge vorteilhafterweise hoch, insbesondere eine größtmöglich verfügbare Heizleistung.

In Schritt S6 wird der Dampf in Form mindestens eines Dampfstoßes in den Dampfbehandlungsraum 7 eingeleitet. Eine Zahl und/oder eine Dauer des mindestens einen Dampfstoßes lässt sich in einer Weiterbildung einstellen, z.B. nutzerseitig über die Nutzerschnittstelle 10, ferngesteuert über ein Smartphone o.ä. und/oder programmgesteuert. Es ist insbesondere möglich, grundsätzlich beliebig viele (z.B. auch mehr als drei Dampfstöße) durchzuführen, falls die in der Dampferzeugungskammer 5 vorhandene Wassermenge dazu ausreicht.

Ist die Dampferzeugungskammer 5 geleert worden, kann das Verfahren erneut durchgeführt werden, und zwar durch einen Nutzer ausgelöst oder geräteseitig veranlasst, z.B. programmgesteuert. Dazu braucht die Tür 9 nicht geöffnet zu werden.

Außerdem kann die in Schritt S6 während eines Schnellbedampfungsablaufs in den Dampfbehandlungsraum 7 insgesamt abgebbare Dampfmenge begrenzt werden, z.B. auf eine ohne erneute Füllung der Dampferzeugungskammer 5 erreichbare Dampfmenge oder auf eine Dampfmenge, die sich aus dem Wassertank 2 heranfördern lässt.

Falls in Schritt S5 keine Anweisung erfolgt ("N"), wird das Wasser in Schritt S4 weiter auf der Vorwärmtemperatur gehalten und weiter auf das Geben der Anweisung hin überwacht.

In einem auf Schritt S6 folgenden Schritt S7 wird der Schnellbedampfungsablauf beendet.

Selbstverständlich ist die vorliegende Erfindung nicht auf das gezeigte Ausführungsbeispiel beschränkt.

So kann das gezeigte Ausführungsbeispiel zusammen mit einem Vorheizen ablaufen. Insbesondere kann vor Schritt S5 oder S6 eine Vorheizfunktion aktiviert werden und. Die Anweisung zur Einleitung des Wasserdampfs in Schritt S5 kann beispielsweise mit Beendigung der Vorheizfunktion erfolgen, insbesondere geräteseitig mit einem Schließen der Tür.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Haushalts-Dampfbehandlungsgerät
- 2: Wassertank
- 3: Pumpe
- 4: Dampferzeuger
- 5: Dampferzeugungskammer
- 6: Steuereinrichtung
- 7: Dampfbehandlungsraum
- 8: Beschickungsöffnung
- 9: Tür
- 10: Nutzerschnittstelle
- S1-S7: Verfahrensschritte
- D: Wasserdampf
- W: Wasser

## Patentansprüche

1. Verfahren (S1-S7) zum Betreiben eines Haushalts-Dampfbehandlungsgeräts (1) mit einem Dampfbehandlungsraum (7) und mit einem außerhalb des Dampfbehandlungsraums (7) angeordneten Dampferzeuger (4), der mit einem Wassertank (2) verbunden ist, wobei bei dem Verfahren
a) Wasser (W) mittels des Dampferzeugers (4) auf eine erhöhte Vorwärmtemperatur unterhalb einer Verdampfungstemperatur erhitzt wird (S3),
b) das Wasser (W) auf der Vorwärmtemperatur gehalten wird (S4) und
c) auf eine Anweisung zur Einleitung von Wasserdampf (D) hin (S5) das Wasser (W) in dem Dampferzeuger (4) weiter auf eine Verdampfungstemperatur erhitzt und der erzeugte Wasserdampf (D) in den Dampfbehandlungsraum (7) eingeleitet wird (S6), wobei der Wasserdampf (D) in Form mindestens eines Dampfstoßes eingeleitet wird (S6).

2. Verfahren (S1-S7) nach Anspruch 1, bei dem die Vorwärmtemperatur nicht mehr als 10°C unter der Verdampfungstemperatur liegt, insbesondere ca. 5°C unter der Verdampfungstemperatur liegt.

3. Verfahren (S1-S7) nach einem der vorhergehenden Ansprüche, bei dem in Schritt c) das erhitzte Wasser (W) mit einer größtmöglich verfügbaren Heizleistung auf die Verdampfungstemperatur erhitzt wird (S6).

4. Verfahren (S1-S7) nach den Ansprüchen 2 und 3, bei dem auf die Anweisung zur Einleitung von Wasserdampf hin der Wasserdampf (D) innerhalb von fünf Sekunden oder weniger, insbesondere innerhalb von drei Sekunden oder weniger, in den Dampfbehandlungsraum (7) eingeleitet wird.

5. Verfahren (S1-S7) nach einem der vorhergehenden Ansprüche, bei dem das Verfahren (S1-S7) auf eine Nutzereingabe hin aktiviert wird (S1).

6. Verfahren (S1-S7) nach einem der vorhergehenden Ansprüche, bei dem die Anweisung zur Einleitung des Wasserdampfs (D) in Schritt c) nutzerseitig erfolgt (S5).

7. Verfahren (S1-S7) nach einem der vorhergehenden Ansprüche, bei dem die Anweisung zur Einleitung des Wasserdampfs (D) in Schritt c) geräteseitig erfolgt (S5).

8. Verfahren (S1-S7) nach einem der vorhergehenden Ansprüche, bei dem eine Zahl und/oder eine Dauer des mindestens einen Dampfstoßes eingestellt wird.

9. Verfahren (S1-S7) nach einem der vorhergehenden Ansprüche, bei dem eine während des Verfahrens in den Dampfbehandlungsraum (7) abgebbare Dampfmenge begrenzt wird.

10. Verfahren (S1-S7) nach einem der vorhergehenden Ansprüche, bei dem das Verfahren (S1-S7) zusammen mit einem Vorheizen des Dampfbehandlungsraums (7) durchgeführt wird.

11. Verfahren (S1-S7) nach den Ansprüchen 7 und 10, bei dem
- vor Schritt c) eine Vorheizfunktion aktiviert wird und
- die Anweisung zur Einleitung des Wasserdampfs (D) in Schritt c) mit Beendigung der Vorheizfunktion erfolgt.

12. Verfahren nach Anspruch 11, bei dem die Anweisung zur Einleitung des Wasserdampfs (D) in Schritt c) nach Beschickung des vorgeheizten Dampfbehandlungsraums (7) geräteseitig mit einem Schließen einer den Dampfbehandlungsraum (7) verschließenden Tür (9) erfolgt.

13. Verfahren (S1-S7) nach einem der vorhergehenden Ansprüche, bei dem das Verfahren (S1-S7) zum Backen von Teigwaren durchgeführt wird, insbesondere unter Einsatz eines Brotbacksteins.

14. Haushalts-Dampfbehandlungsgerät (1), aufweisend einen mit einem Wassertank (2) verbunden Dampferzeuger (4), einen Dampfbehandlungsraum (7), eine Nutzerschnittstelle (10) und eine Steuereinrichtung (6), **dadurch gekennzeichnet, dass** die Steuereinrichtung (6) zur Durchführung des Verfahrens (S1-S11) nach einem der vorhergehenden Ansprüche eingerichtet ist.

15. Haushalts-Dampfbehandlungsgerät (1) nach Anspruch 14, **dadurch gekennzeichnet, dass** das Haushalts-Dampfbehandlungsgerät (1) ein Backofen mit einer Dampfbehandlungsfunktionalität und einer Vorheizfunktionalität ist.

## Claims

1. Method (S1-S7) for operating a household steam treatment appliance (1) with a steam treatment compartment (7) and with a steam generator (4) which is arranged outside of the steam treatment compartment (7) and connected to a water tank (2), wherein, with the method
a) water (W) is heated to an increased preheating temperature below an evaporation temperature (S3) by means of the steam generator (4),
b) the water (W) is kept at the preheating temperature (S4) and
c) in response to an instruction to introduce water vapour (D) (S5), the water (W) in the steam generator (4) is further heated to an evaporation temperature and the generated water vapour (D) is introduced into the steam treatment compartment (7) (S6), wherein the water vapour (D) is introduced (S6) in the form of at least one steam jet.

2. Method (S1-S7) according to claim 1, in which the preheating temperature is no more than 10°C below the evaporation temperature, in particular approx. 5°C below the evaporation temperature.

3. Method (S1-S7) according to one of the preceding claims, in which in step c), the heated water (W) is heated (S6) to the evaporation temperature with the largest possible available heat output.

4. Method (S1-S7) according to claims 2 and 3, in which in response to the instruction to introduce water vapour, the water vapour (D) is introduced into the steam treatment compartment (7) within five seconds or less, in particular within three seconds or less.

5. Method (S1-S7) according to one of the preceding claims, in which the method (S1-S7) is activated in response to a user input (S1).

6. Method (S1-S7) according to one of the preceding claims, in which the instruction to introduce water vapour (D) in step c) is carried out (S5) by the user.

7. Method (S1-S7) according to one of the preceding claims, in which the instruction to introduce water vapour (D) in step c) is carried out (S5) on the appliance side.

8. Method (S1-S7) according to one of the preceding claims, in which a number and/or a duration of the at least one steam jet is adjusted.

9. Method (S1-S7) according to one of the preceding claims, in which a quantity of steam which can be output into the steam treatment compartment (7) during the method is restricted.

10. Method (S1-S7) according to one of the preceding claims, in which the method (S1-S7) is performed together with a preheating of the steam treatment compartment (7).

11. Method (S1-S7) according to claims 7 and 10, in which
- a preheating function is activated before step c) and
- the instruction to introduce water vapour (D) in step c) is carried out by terminating the preheating function.

12. Method according to claim 11, in which the instruction to introduce the water vapour (D) in step c) is carried out after loading the preheated steam treatment compartment (7) on the appliance side by closing a door (9) sealing off the steam treatment compartment (7).

13. Method (S1-S7) according to one of the preceding claims, in which the method (S1-S7) is performed to cook dough-based food, in particular by using a bread baking stone.

14. Household steam treatment appliance (1), having a steam generator (4) connected to a water tank (2), a steam treatment compartment (7), a user interface (10) and a control facility (6), **characterised in that** the control facility (6) is configured to carry out the method (S1-S11 according to one of the preceding claims.

15. Household steam treatment appliance (1) according to claim 14, **characterised in that** the household stream treatment appliance (1) is a baking oven with a steam treatment functionality and a preheating functionality.

## Revendications

1. Procédé (S1-S7) d'exploitation d'un appareil ménager de traitement à la vapeur (1) avec une chambre de traitement à la vapeur (7) et avec un générateur de vapeur (4) disposé en dehors de la chambre de traitement à la vapeur (7), qui est relié à un réservoir d'eau (2), dans lequel dans le procédé
a) de l'eau (W) est chauffée au moyen du générateur de vapeur (4) à une température de préchauffage élevée, en-deçà d'une température d'évaporation (S3),
b) l'eau (W) est maintenue à la température de préchauffage (S4) et
c) en réponse à une instruction d'introduction de vapeur d'eau (D) (S5), l'eau (W) dans le générateur de vapeur (4) est chauffée à une température d'évaporation et la vapeur d'eau (D) produite est introduite (S6) dans la chambre de traitement à la vapeur (7), dans lequel la vapeur d'eau (D) est introduite sous la forme d'au moins un coup de vapeur (S6).

2. Procédé (S1-S7) selon la revendication 1, dans lequel la température de préchauffage n'est pas plus de 10°C inférieure à la température d'évaporation, en particulier est d'environ 5°C inférieure à la température d'évaporation.

3. Procédé (S1-S7) selon l'une des revendications précédentes, dans lequel, à l'étape c), l'eau chauffée (W) est chauffée (S6) à la température d'évaporation avec une puissance de chauffage la plus élevée possible disponible.

4. Procédé (S1-S7) selon les revendications 2 et 3, dans lequel, en réponse à l'instruction d'introduction de vapeur d'eau, la vapeur d'eau (D) est introduite dans la chambre de traitement à la vapeur (7) en l'espace de cinq secondes ou moins, en particulier en l'espace de trois secondes ou moins.

5. Procédé (S1-S7) selon l'une des revendications précédentes, dans lequel le procédé (S1-S7) est activé (S1) en réponse à une saisie d'utilisateur.

6. Procédé (S1-S7) selon l'une des revendications précédentes, dans lequel l'instruction d'introduction de la vapeur d'eau (D) à l'étape c) est donnée par l'utilisateur (S5).

7. Procédé (S1-S7) selon l'une des revendications précédentes, dans lequel l'instruction d'introduction de la vapeur d'eau (D) à l'étape c) est donnée par l'appareil (S5).

8. Procédé (S1-S7) selon l'une des revendications précédentes, dans lequel un nombre et/ou une durée de l'au moins un coup de vapeur est réglé(e).

9. Procédé (S1-S7) selon l'une des revendications précédentes, dans lequel une quantité de vapeur pouvant être envoyée dans la chambre de traitement à la vapeur (7) pendant le procédé est limitée.

10. Procédé (S1-S7) selon l'une des revendications précédentes, dans lequel le procédé (S1-S7) est exécuté conjointement à un préchauffage de la chambre de traitement à la vapeur (7).

11. Procédé (S1-S7) selon les revendications 7 et 10, dans lequel une fonction de
- préchauffage est activée avant l'étape c), et
- l'instruction d'introduction de la vapeur d'eau (D) à l'étape c) est donnée à la fin de la fonction de préchauffage.

12. Procédé selon la revendication 11, dans lequel l'instruction d'introduction de la vapeur d'eau (D) à l'étape c) après alimentation de la chambre de traitement à la vapeur (7) préchauffée est donnée par l'appareil, à travers une fermeture d'une porte (9) fermant la chambre de traitement à la vapeur (7).

13. Procédé (S1-S7) selon l'une des revendications précédentes, dans lequel le procédé (S1-S7) est mis en œuvre pour cuire des pâtes alimentaires, notamment en utilisant une pierre à pain.

14. Appareil ménager de traitement à la vapeur (1), présentant un générateur de vapeur (4) relié à un réservoir d'eau (2), une chambre de traitement à la vapeur (7), une interface utilisateur (10) et un dispositif de commande (6), **caractérisé en ce que** le dispositif de commande (6) est aménagé pour l'exécution du procédé (S1-S11) selon l'une des revendications précédentes.

15. Appareil ménager de traitement à la vapeur (1) selon la revendication 14, **caractérisé en ce que** l'appareil ménager de traitement à la vapeur (1) est un four avec une fonctionnalité de traitement à la vapeur et une fonctionnalité de préchauffage.
